# EUROPEAN PATENT SPECIFICATION

(11) **EP 4 450 151 B1**
(45) Date of publication and mention of the grant of the patent: **13.05.2026**
(21) Application number: 23873033.7
(22) Date of filing: 25.09.2023
(51) Int. Cl.: B01F 27/726, B01F 27/1143, B01F 27/1144, B01F 101/59

(54) **HIGH-SHEAR MIXING APPARATUS**
MISCHVORRICHTUNG MIT HOHER SCHERUNG
APPAREIL DE MÉLANGE À CISAILLEMENT ÉLEVÉ

(30) Priority: 26.09.2022 KR 20220121462
(43) Date of publication of application: 23.10.2024
(73) Proprietor: LG Energy Solution, Ltd., Seoul 07335 (KR); LG Electronics Inc., Yeongdeungpo-gu Seoul 07336 (KR)
(72) Inventor: KIM, Taegon, Daejeon 34122 (KR); KIM, Ki Tae, Daejeon 34122 (KR); KIM, Sung Sik, Pyeongtaek-si Gyeonggi-do 17709 (KR); PARK, Jae Seong, Pyeongtaek-si Gyeonggi-do 17709 (KR); NAM, Hee Jeong, Pyeongtaek-si Gyeonggi-do 17709 (KR); HAH, Hoejin, Daejeon 34122 (KR); SONG, Min Sang, Daejeon 34122 (KR)
(74) Representative: Goddar, Heinz J.
(86) International application number: PCT/KR2023/014688
(87) International publication number: WO 2024/071917

(56) References cited:
- EP-A1- 0 014 125
- WO-A1-2018/152344
- CN-U- 215 877 045
- CN-U- 215 877 045
- JP-A- 2002 224 891
- JP-A- 2002 239 360
- JP-A- H07 132 544
- KR-A- 20080 012 995
- KR-A- 20180 119 568
- US-A1- 2009 238 911

## Description

### [Technical Field]

The present application claims the benefit and priority to Korean Patent Application No. 10-2022-0121462, filed September 26, 2022.

The present invention relates to a high shear mixing apparatus, and more particularly to a high shear mixing apparatus used to fabricate dry electrodes for a secondary battery.

### [Related Art]

Stirring devices are used in various paste manufacturing facilities and for fine mixing of chemical raw materials, such as inks, pigments, paints, cosmetics, pharmaceuticals and coatings, various coatings, abrasives, ceramic or metal powders, or various electronic materials (PZT, dielectric, MLCC, Ferrite, display materials). As a stirring device, a planetary mixer or twin screw extruder, which uses blades and rotors to stir high-viscosity materials in a container, is used, especially for stirring high-viscosity materials.

On the other hand, with the expansion and development of secondary battery applications, improvements in low resistance, high capacity, mechanical properties, and productivity of electrodes are continuously required, and the need for high shear mixing of electrode fabrication mixtures is also increasing. Specifically, a technology for fabricating dry electrode films by mixing binders and conductive materials without liquid media such as solvents or dispersants, and then passing the powder mixture through a rolling roll is being actively developed, and high shear mixing is being applied to fabricate such electrodes.

The high shear mixing methods described above use binders called "fibrillizable binders" or "fibril-forming binders," which, when subjected to high shear mixing in a mixture containing such binders, micro-fibrillate and bind the active and conductive materials.

Conventional planetary mixers and twin screw extruders are used for the above high shear mixing method.

However, during this high shear mixing process, the fibrillizable polymer becomes a chewing gum-like state, which puts a large load on the planetary mixer or twin screw extruder, and damage to the equipment often occurs. In order to prevent such equipment damage, a method of reducing the shearing force is considered, but in this case, the fibrillizable polymer is not well fibrillized. Therefore, it is very difficult to build a large-scale mass production system for fabricating dry electrodes for secondary batteries with conventional high shear mixing apparatus.

### [Prior Art Reference]

### [patent reference]

Korean Laid-open Publication No. 10-2011-0117902
JP 2002 224891 A describes an operating method where the wastes are clogged in a casing in spite of attempt to reversely rotate a screw body for dewatering, after attempting, for example, three times, the reverse rotation, stop and forward rotation, open an opening/closing cap disposed at a rear end of the opening/closing case by an opening/closing cylinder device, then reversely rotate the screw body for dewatering and take out the wastes in the clogged state out of a discharge aperture.

### [Detailed Description of the Invention]

### [Technical Problem]

The present invention is designed to solve the above problems of the prior art, and aims to provide a high shear mixing apparatus that can efficiently mix materials without generating overload when mixing materials by high shearing force.

In particular, it is an object to provide a high shear mixing apparatus capable of efficiently micro-fibrillating the polymer without generating an overload during high shear mixing of a mixture for fabricating a dry electrode comprising a fibrillizable polymer as a binder.

### [Technical Solution]

The present invention is defined according to the subject matter of the appended independent claim. Particular embodiments are given by the additional features of the appended dependent claims. In order to accomplish the above objectives, the present invention provides a high shear mixing apparatus, comprising: a mixing screw and a housing receiving the mixing screw; wherein the housing includes a nozzle provided at a distal end thereof and a hopper in communication therewith, wherein the mixing screw includes a rotating shaft and blades provided on an outer surface of the rotating shaft, wherein the rotating shaft has a first tapered portion having a gradually increasing outer diameter in a direction toward the nozzle, a kneading portion having a uniform outer diameter or a gradually increasing outer diameter in a direction toward the nozzle, and a second tapered portion having a gradually decreasing outer diameter in a direction toward the nozzle in this order, and wherein the blades comprise first spiral blades disposed on an outer surface of the first tapered portion, second spiral blades disposed on an outer surface of the kneading portion, and third spiral blades disposed on an outer surface of the second tapered portion.

The first spiral blades and the second spiral blades are independently formed, a pitch of the first spiral blades is larger than a pitch of the second spiral blade, and the first spiral blades and the second spiral blades are spirally wound in a same direction about the rotating shaft.

An acute angle of the second spiral blades is larger than an acute angle of the first spiral blades based on an acute angle formed by the spiral blades with respect to a cross-section perpendicular to a center axis of the rotating shaft.

The second spiral blades comprise three or more independent blades superimposed on an outer surface of the kneading portion.

In an embodiment of the present invention, the second spiral blades and third spiral blades may be spirally wound in a same direction about the rotating shaft.

In an embodiment of the present invention, the third spiral blades may comprise three or more independent blades superimposed on the outer surface of the second tapered portion.

In an embodiment of the present invention, the second spiral blades and third spiral blades may be provided independently of each other.

In an embodiment of the present invention, the second spiral blades may extend to the outer surface of the second tapered portion to form the third spiral blades.

In an embodiment of the present invention, a gap may be positioned between the second spiral blades and the third spiral blades, and the gap may be positioned between a terminal end of the kneading portion and a front end of the second tapered portion of the rotating shaft.

In an embodiment of the present invention, the three or more independent blades provided in the second tapered portion may be formed up to the distal surface of the second tapered portion toward the nozzle.

In an embodiment of the present invention, a diameter of the distal surface of the second tapered portion in the rotating shaft toward the nozzle may be from 0.5 to 1 times, preferably 0.7 to 0.8 times, as large as an inner diameter of the nozzle.

In an embodiment of the present invention, the rotating shaft may continuously comprise the first tapered portion having a gradually increasing outer diameter in a direction toward the nozzle, the kneading portion having a uniform outer diameter or a gradually increasing outer diameter from a maximum outer diameter of the first tapered portion, and the second tapered portion having a gradually decreasing outer diameter from an end of the kneading portion.

In an embodiment of the present invention, a space between the outer surface of the first tapered portion of the rotating shaft and the housing may be gradually reduced toward the nozzle, a space between the outer surface of the kneading portion and the housing may be gradually reduced or kept uniform toward the nozzle, and a space between the second tapered portion and the housing may be kept uniform or gradually reduced.

In an embodiment of the present invention, a length of the first tapered portion, a length of the kneading portion, and a length of the second tapered portion on the rotating shaft may be in a ratio of 1 : 0.1 to 0.3 : 0.2 to 0.45.

In an embodiment of the present invention, an acute angle of the second spiral blades may be less than or equal to an acute angle of the third spiral blades based on an acute angle formed by the spiral blades with respect to a cross-section perpendicular to the center axis of the rotating shaft.

In an embodiment of the present invention, the third spiral blades may have a maximum pitch at a starting point of the second tapered portion abutting the kneading portion, a minimum pitch at a distal surface of the second taper toward the nozzle, and the pitch may gradually decrease along the rotating shaft toward the nozzle.

In an embodiment of the present invention, a perpendicular cross-section in a direction wound about the rotating shaft of the first spiral blades may include two height-forming edges, and one of the height-forming edges toward the nozzle may form an acute angle of 30 to 80 degrees, preferably 50 to 70 degrees, with respect to the center axis of the rotating shaft in a direction opposite the nozzle.

In an embodiment of the present invention, a perpendicular cross-section in a direction wound about the rotating shaft of the second spiral blades may include two height-forming edges, and one of the height-forming edges toward the nozzle may form an acute angle of 40 to 80 degrees, preferably 50 to 70 degrees, with respect to the center axis of the rotating shaft in a direction opposite the nozzle.

In an embodiment of the present invention, a perpendicular cross-section in a direction wound about the rotating shaft of the third spiral blades may include two height-forming edges, and one of the height-forming edges toward the nozzle may form an acute angle of 40 to 80 degrees, preferably 50 to 70 degrees, with respect to the center axis of the rotating shaft in a direction opposite the nozzle.

In an embodiment of the present invention, the high shear mixing apparatus may be used for high shear mixing of a mixture for fabricating a dry electrode comprising a fibrillizable polymer as a binder so as to micro-fibrillate the fibrillizable polymer.

### [Advantageous Effects]

The high shear mixing apparatus of the present invention provides an effect in which it is possible to mix materials efficiently without imposing overload when mixing materials by a high shearing force. Furthermore, since damage to the apparatus is minimized by this effect, the apparatus may be configured in a large capacity.

In particular, the high shear mixing apparatus of the present invention provides the effect of efficiently micro-fibrillating the polymer without causing overloading during high shear mixing of a mixture for fabricating a dry electrode comprising a fibrillizable polymer as a binder.

### [Brief Description of Drawings]

FIG. 1 is a drawing schematically illustrating an embodiment of a high shear mixing apparatus of the present invention,
FIGS. 2 through 4 are drawings illustrating an embodiment of a high shear mixing unit provided in a high shear mixing apparatus of the present invention,
FIG. 5 is a drawing illustrating a specific resource of a high shear mixing unit provided in the high shear mixing apparatus of the present invention,
FIG. 6 is a schematic illustration of a vertical cross-sectional view in the direction of winding about a rotating shaft of each of the blade portions provided in the high shear mixing apparatus of the present invention,

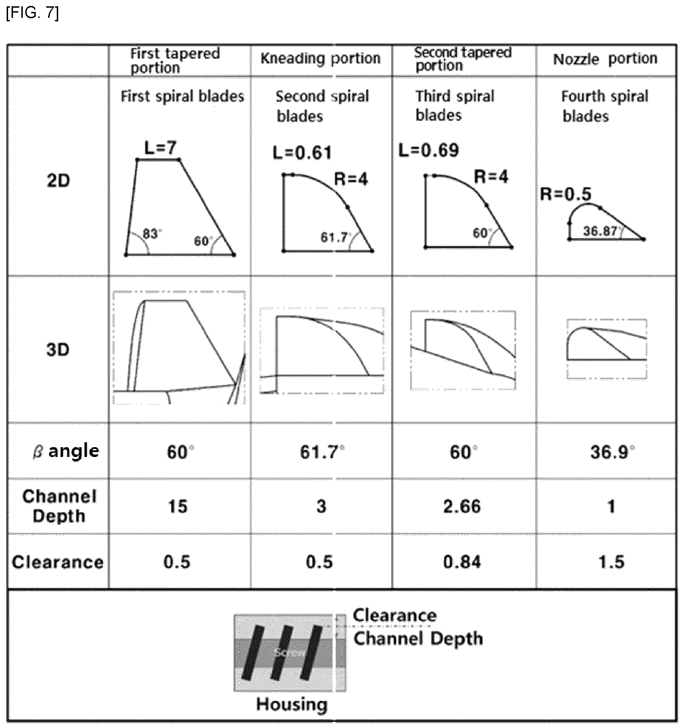

FIG. 7 is a drawing illustrating the shape and material of each of the blade portions provided in the high shear mixing apparatus of the present invention,

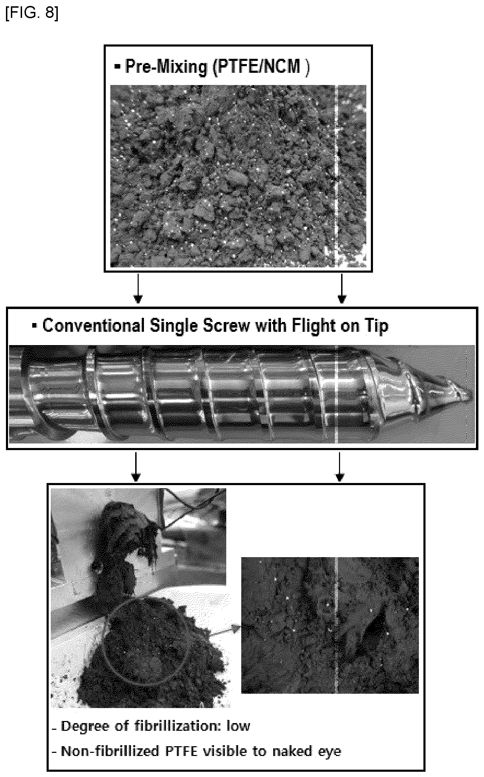

FIG. 8 is a photographic representation of the shape of a single-axis screw in a conventional mixing apparatus and the results of high shear mixing using it,

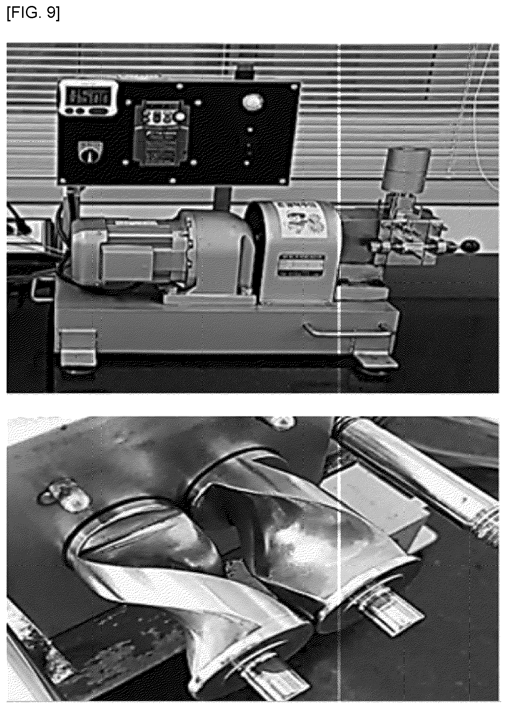

FIG. 9 is a photographic representation of a conventional twin screw kneader,

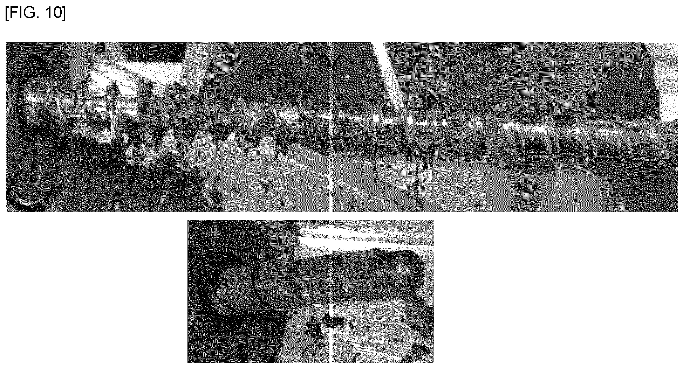

FIG. 10 is a photographic representation of a conventional single-axis screw used in polymer mixing applications and its state of use,
FIG. 11 is a schematic illustration of a mixing mechanism in the form of first spiral blades provided in the present invention and in a conventional high shear mixing apparatus, and

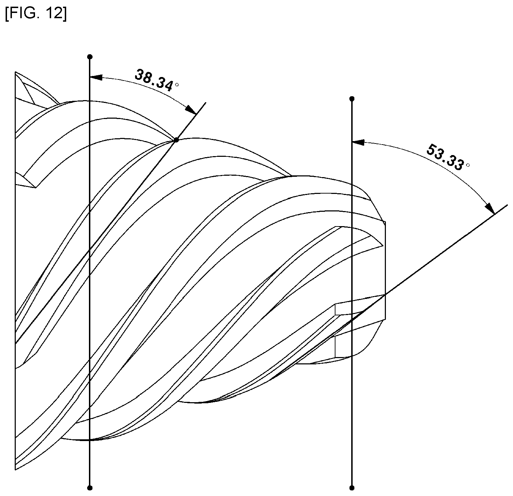

FIG. 12 is a drawing schematically illustrating the shape of third spiral blades provided in the high shear mixing apparatus of the present invention.

### [Best Mode for Practicing the Invention]

Hereinafter, embodiments of the present invention will be described in detail with reference to the accompanying drawings so that one having ordinary knowledge in the technical field to which the present invention belongs may readily practice the present invention. However, the present invention may be implemented in many different forms and is not limited to the embodiments described herein. Throughout the specification, like parts are designated by like drawing designations.

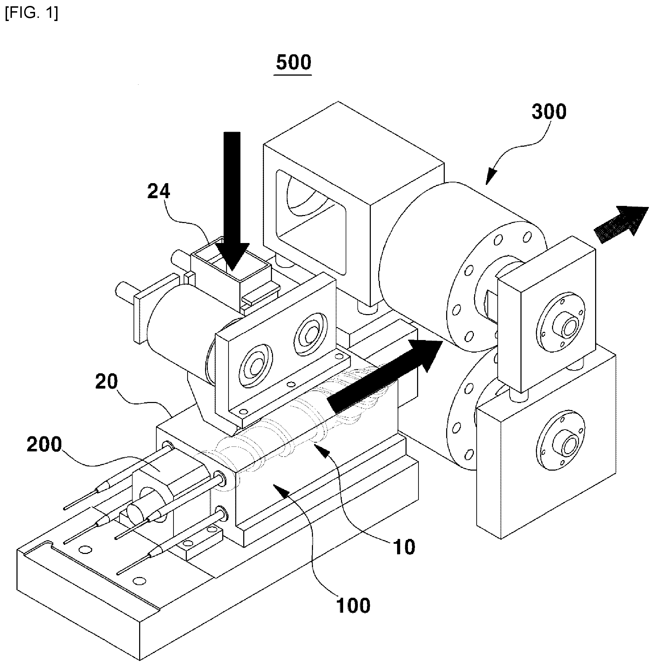

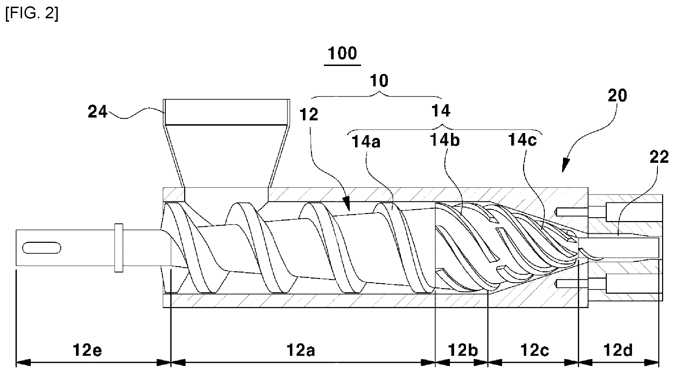

FIG. 1 is a perspective view illustrating an embodiment of a high shear mixing apparatus 500 of the present invention; and FIGS. 2 through 4 are cross-sectional views illustrating embodiments of a high shear mixing unit 100 provided in the high shear mixing apparatus 500 of the present invention.

The high shear mixing apparatus 500 of the present invention, as shown in FIGS. 1 and 2, comprises: a high shear mixing unit 100 comprising a mixing screw 10 and a housing 20 receiving the mixing screw.

The housing 20 comprises a nozzle 22 provided at a distal end thereof and a hopper 24 communicating therewith.

The mixing screw 10 comprises a rotating shaft 12 and blades 14 provided on an outer surface of the rotating shaft.

The rotating shaft 12 comprises, in this order, a first tapered portion 12a having a gradually increasing outer diameter in a direction toward the nozzle 22, a kneading portion 12b having a uniform outer diameter or a gradually increasing outer diameter in a direction toward the nozzle, and a second tapered portion 12c having a gradually decreasing outer diameter in a direction toward the nozzle.

The blades 14 comprise first spiral blades 14a disposed on an outer surface of the first tapered portion 12a, second spiral blades 14b disposed on an outer surface of the kneading portion 12b, and third spiral blades 14c disposed on an outer surface of the second tapered portion 12c.

The high shear mixing apparatus 500 of the present invention comprises a simple structure of a single-axis screw, such that it can be manufactured inexpensively and has the advantages of easy processing management and maintenance. In addition, it has the advantage of stable drive characteristics compared to a two-axis screw.

In particular, the high shear mixing apparatus 500 of the present invention includes an improved mixing screw 10, which significantly improves compression and discharge forces for fibrillizable binder (e.g., PTFE) powders, and provides the advantage of easily controlling the degree of fibrillization and powder compaction ratio for fibrillizable binders.

In an embodiment of the present invention, the length of the first tapered portion 12a, the length of the kneading portion 12b, and the length of the second tapered portion 12c on the rotating shaft 12 may be formed in a ratio of 1 : 0.1 to 0.3 : 0.2 to 0.45, preferably a ratio of 1 : 0.15 to 0.25 : 0.3 to 0.4.

When the length ratio of the angular portions comprising the rotating shaft 12 meets the above-described range, the dispersibility of the mixture object and the high shear mixing efficiency are increased, which is desirable.

In particular, if the length ratio of the kneading portion exceeds 0.3 in the above, it is undesirable because a problem of stagnation of the mixture object occurs.

Specifically, for example, the length of the first tapered portion 12a may be 100 mm to 200 mm, preferably 120 mm to 160 mm. The length of the kneading portion 12b may be from 20 mm to 40 mm, preferably from 25 mm to 35 mm. If the length of the kneading portion is too short, the mixture object cannot be pushed to the top due to poor rotational motion, and if it is too long, the mixture object gets stuck and stagnation occurs.

The length of the second tapered portion 12c may be from 30 mm to 70 mm, preferably from 40 mm to 60 mm, more preferably from 45 mm to 55 mm. The nozzle 22 may have a length of 40 mm to 80 mm, preferably 50 mm to 70 mm.

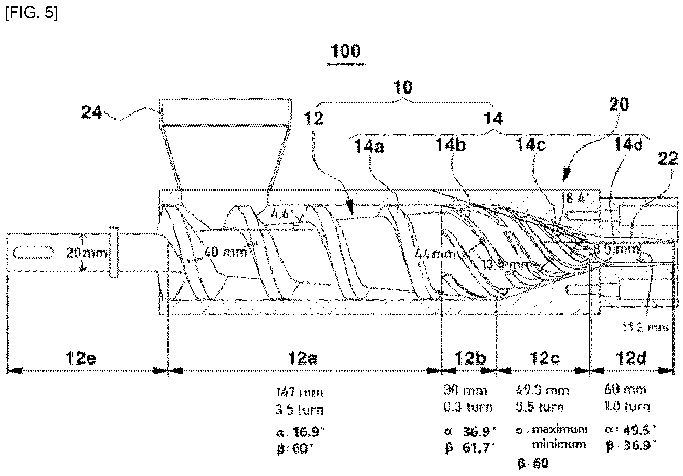

In an embodiment of the present invention, as shown in FIG. 5, the first tapered portion 12a may be tapered to form an angle of 3 to 6 degrees, preferably 4 to 5 degrees, with respect to the center axis of the rotating shaft 12. If the tapered angle is too large, the passage of the powder through the squeezing section is delayed by the phase change of the powder, so that the mixture object is stuck between the blades and stagnation occurs.

Further, the second tapered portion 12c may be tapered to form an angle of 15 to 22 degrees, preferably 16 to 20 degrees, with the respect to the center axis of the rotating shaft 12. If the angle that the second tapered portion 12c forms with respect to the center axis of the rotating shaft 12 is outside the above range, the mixture object (e.g., the electrode active material composition) is not ejected and it is difficult to fibrillize thereof properly.

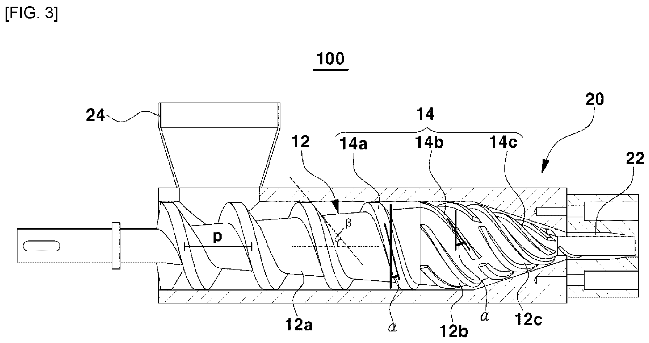

In an embodiment of the present invention, the first spiral blades 14a and the second spiral blades 14b are formed independently, as shown in FIG. 3. Moreover, the pitch P of the first spiral blades 14a is larger than the pitch of the second spiral blades 14b, and the first spiral blades and the second spiral blades may be spirally wound in the same direction about the rotating shaft.

The first spiral blades 14a function to perform mixing while conveying the mixture object (e.g., the electrode active material composition) being fed into the hopper 24 toward the nozzle. Furthermore, while mixing and conveying toward the nozzle, the mixture object passes over the wide blade surfaces of the inclined spirals, at which time the fibrillizing binder begins to be activated by the applied shearing force, and the initial fibrillizing stage (pre-fibrill) proceeds.

The pitch P between the first spiral blades 14a may be formed relatively large. On the other hand, since kneading and high shear mixing are performed in the second spiral blades 14b, it may be effective to have a relatively small pitch P between the second spiral blades 14b.

In an embodiment of the present invention, the pitch P of the first spiral blades 14a may be from 20 mm to 60 mm, and preferably from 35 mm to 50 mm.

If the pitch P of the first spiral blades 14a is less than the above-described range, the mixture object may get stuck in the space between the pitches and hinder the conveyance, which is undesirable because the mixture object may become difficult to pass over the first spiral blades and the initial fibrillation may not be efficient.

The pitch P of the second spiral blades 14b may be from 8 mm to 25 mm, and preferably from 10 mm to 17 mm.

If the pitch (P) of the second spiral blades 14b is less than the above-described range, it is undesirable because the device may be overloaded during high shear mixing, and if it exceeds the above-described range, it is undesirable because the disadvantage of insufficient kneading may occur.

The maximum pitch (P) of the third spiral blades 14c may be 8 mm to 25 mm, preferably 10 mm to 17 mm, and the minimum pitch (P) may be 5 mm to 12 mm, preferably 6 mm to 10 mm.

The third spiral blades 14c gradually decrease in pitch as they go toward the nozzle direction, i.e., at the starting point of the second tapered portion abutting the kneading portion, the third spiral blades 14c may be formed to have a maximum pitch, and the third spiral blades 14c may have a minimum pitch at the distal surface of the second tapered portion toward the nozzle.

When the pitch P of the third spiral blades 14c meets the above-described range, the free volume is gradually reduced as the pitch is gradually reduced, and further squeezing of the mixture object is achieved accordingly, and the effect of further increasing fibrillation as the mixture object passes over the third spiral blades may be obtained.

Meanwhile, the pitch P of the fourth spiral blades 14d provided on the outer surface of a front end shaft portion 12d may have a pitch of 30 mm to 50 mm, preferably 35 mm to 45 mm. When the pitch of the fourth spiral blades meets the above-described range, a smooth discharge of the mixture object becomes possible, and further fibrillization can be achieved, which is desirable.

In an embodiment of the present invention, considering an acute angle formed by the spiral blades 14 with respect to a cross-section perpendicular to the center axis of the rotating shaft 12, it may be desirable that the acute angle (α in FIG. 3) of the second spiral blades 14b is larger than the acute angle of the first spiral blades 14a. This is because the first spiral blades 14a perform a function of mixing while conveying the mixture object (e.g., the electrode active material composition) fed into the hopper 24 toward the nozzle, so that the acute angle of the first spiral blades 14a may be formed relatively small. On the other hand, since the second spiral blades 14b perform kneading and high shear mixing, the acute angle of the second spiral blades 14b should be relatively large so that a large pressure can be applied to the mixture object so as to accomplish effective kneading and mixing.

Specifically, the acute angle of the second spiral blades 14b may preferably be 1.5 times to 3 times, and more preferably 2 times to 2.5 times, larger than the acute angle of the first spiral blades 14a, as shown in FIG. 3.

Also, for the same reason, the acute angle of the third spiral blades 14c may be larger than or equal to the acute angle of the second spiral blades 14b at a portion adjacent to the second spiral blades 14b, compared to the acute angle of the second spiral blades 14b. Further, the acute angle may be increasingly larger as it proceeds from the portion adjacent to the second spiral blades 14b to a portion adjacent to the distal surface of the second tapered portion.

In the present invention, the acute angle is defined to mean the angle that a straight line connecting two center points of the outer surface of the spiral blades 14 makes with a cross-section perpendicular to the center axis of the rotating shaft 12, as shown in FIG. 3.

Specifically, in an embodiment of the present invention, the acute angle of the first spiral blades 14a may be formed from 10 degrees to 40 degrees, preferably from 14 degrees to 20 degrees, and the acute angle of the second spiral blades 14b may be formed from 30 degrees to 55 degrees, preferably from 33 degrees to 41 degrees.

The acute angle of the third spiral blades 14c may be formed at an acute angle of 30 degrees to 55 degrees, preferably 35 degrees to 45 degrees, at the portion adjacent to the second spiral blades 14b, with the acute angle increasingly larger as it proceeds from the portion adjacent to the second spiral blades 14b to the portion adjacent to the distal surface of the second tapered portion. Further, the acute angle may be formed finally at an acute angle of 40 degrees to 60 degrees, preferably 45 degrees to 55 degrees, at the portion adjacent to the distal surface of the second tapered portion.

In the present invention as a whole, the acute angle of the spiral blades 14 is formed in a gradually increasing trend from the first spiral blades 14a toward the second spiral blades 14b and the third spiral blades 14c. If the acute angle is formed in the form of a gradually decreasing trend, a problem of clogging of the mixing unit may occur.

In particular, within the third spiral blades 14c, the acute angle may be gradually increased as it proceeds toward the distal surface of the second tapered portion.

If the acute angle of each of the blades 14 does not meet the above-described range, it is undesirable because sufficient kneading and high shear mixing is not achieved.

Furthermore, in the case of the fourth spiral blades 14d, an acute angle may be formed from 45 degrees to 55 degrees. In the absence of the fourth spiral blade, nozzle clogging occurs, and if the acute angle is too small, nozzle clogging may occur, and if the acute angle is too large, clogging may occur due to decreased axial motion and increased rotational motion, and additional fibrillization is not expected.

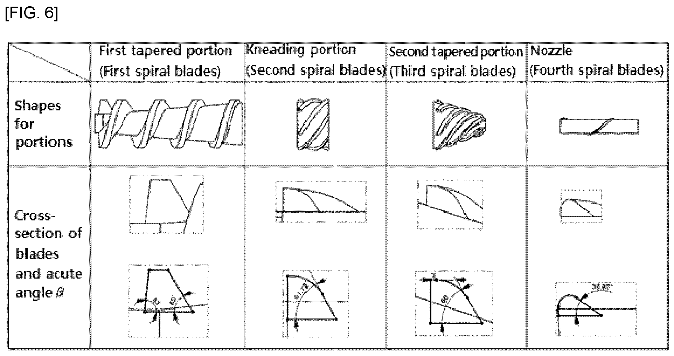

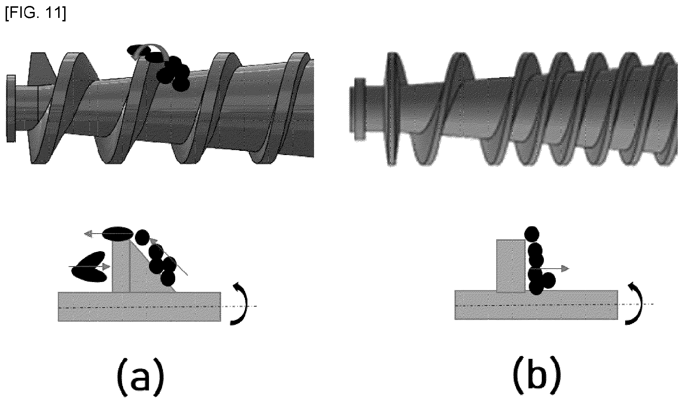

In an embodiment of the present invention, the perpendicular cross-section in the direction in which the first spiral blades 14a are wound about the rotating shaft 12 comprises two height-forming edges, as shown in FIG. 6. In this case, one edge toward the nozzle 22 forms an acute angle β of 30 to 80 degrees, preferably 50 to 70 degrees, more preferably 55 to 65 degrees, with respect to the center axis of the rotating shaft in a direction opposite the nozzle 22 (see FIG. 3). Forming such an acute angle (β) is desirable because the mixture object (e.g., the electrode active material composition) is squeezed as it passes over the edge (leakage flow) having the acute angle (β) and is effectively fibrillized. However, if the acute angle (β) is formed below the above-described range, leakage flow does not occur, so that a disadvantage occurs that sufficient preliminary fibrillation does not occur, and, if the acute angle (β) is formed above the above-described range, as shown in FIG. 11, the mixture object does not pass over the edge and is simply conveyed and thus, not sufficiently squeezed, so that the fibrillation does not occur efficiently. In other words, in this case, only the outer surface is fibrillated, which is undesirable.

Furthermore, one of the two height-forming edges opposite the nozzle 22 forms an angle of 60 to 90 degrees, preferably 80 to 90 degrees, with the center axis of the rotating shaft 12 in a direction toward the nozzle, as shown in FIG. 6. Forming an angle as described above is preferred because preliminary fibrillation is maximized by circulation through the leakage flow without stagnation of the mixture object. If the angle exceeds 90 degrees, stagnation of the mixing material (e.g., electrode active material composition) may occur and circulation of the leakage flow is impeded, which is undesirable, and if the angle is less than 60 degrees, high shearing forces are not generated, which is undesirable.

On the other hand, the perpendicular cross-section in the direction in which the first spiral blades 14a are wound about the rotating shaft 12 may further comprise, together with the two height-forming edges, one terminal edge in connection with the two height-forming edges, as shown in FIG. 6. The terminal edge may be formed in a length of 4 mm to 10 mm, preferably in a length of 5 mm to 8 mm. If the terminal edges are formed below the above-described range, it is difficult to effectively squeeze the mixture object, and if they exceed the above-described range, it is undesirable because overloads are imposed on the device.

In an embodiment of the present invention, the perpendicular cross-section in the direction in which the second spiral blades 14b are wound about the rotating shaft 12 comprises two height-forming edges, as shown in FIG. 6. In this case, one edge toward the nozzle 22 forms an acute angle β of 40 to 80 degrees, preferably 50 to 70 degrees, more preferably 55 to 65 degrees, with respect to the center axis of the rotating shaft 12 in a direction opposite the nozzle. Forming such an acute angle (β) is desirable because the mixture object (e.g., the electrode-active material composition) is squeezed as it passes over the edge having the acute angle (β) and is effectively fibrillized. However, if the acute angle (β) is formed below the above-described range, leakage flow does not occur and, accordingly, sufficient preliminary fibrillation does not occur, which is undesirable, and if the acute angle (β) is formed above the above-described range, the mixture object (e.g., the electrode active material composition) does not pass over the edge and is simply conveyed and is not sufficiently squeezed, so that fibrillation does not occur smoothly. In other words, in this case, only the outer surface is fibrillated, which is undesirable.

The one edge toward the nozzle 22 may be formed as a curve. In this case, the acute angle β is set relative to a tangent line passing through a midpoint of the length of the curve. In particular, the curve may have an R of 3 mm to 5 mm.

Further, the one edge toward the nozzle 22 may be formed with a lower portion formed by a straight line and an upper portion formed by a curve, as shown in FIG. 6. In this case, the acute angle β is set based on an angle formed by the straight portion. Specifically, the curved portion may have an R of 3 mm to 5 mm. When such a value of R is formed, it may be desirable because the mixture object smoothly passes over the blades.

Furthermore, one of the two height-forming edges opposite the nozzle 22 forms an angle of 60 to 90 degrees, preferably 80 to 90 degrees, with respect to the center axis of the rotating shaft 12 in a direction toward the nozzle.

In the second spiral blades 14b, if the one edge toward the nozzle 22 is formed as a straight line, the perpendicular cross-section in the direction wound about the rotating shaft 12 may further comprise, together with the two height-forming edges, one terminal edge connecting to the two height-forming edges. The terminal edge may be formed in a length of 0.3 mm to 0.8 mm, preferably in a length of 0.4 mm to 0.7 mm. If the terminal edges are formed below the above-described range, there will be insufficient generation of shearing force on the mixture object, and if they exceed the above-described range, the thickness of the second spiral blades 14b may become too thick and clogging may occur.

If the one edge toward the nozzle 22 is formed as a curve, as described above, or a combination of a curve and a straight line, then the two edges of the height formation can be directly joined, without forming a terminal edge, as shown in FIG. 6.

In an embodiment of the present invention, the perpendicular cross-section of each of the third spiral blades 14c in the direction in which they are wound about the rotating shaft 12 includes two height-forming edges, as shown in FIG. 6. In this case, the one edge toward the nozzle 22 forms an acute angle β of 40 to 70 degrees, preferably 55 to 65 degrees, with respect to the center axis of the rotating shaft 12 (see FIG. 3) in a direction opposite the nozzle. Forming such an acute angle (β) is desirable because the mixture object (e.g., the electrode-active material composition) is squeezed as it passes over the edge having the acute angle (β) and is effectively fibrillized. However, if the acute angle (β) is formed below the above-described range, leakage flow does not occur and thus sufficient preliminary fibrillation is not achieved, and if the acute angle (β) is formed above the above-described range, the mixture object (e.g., the electrode active material composition) is simply conveyed without passing over the edge and is not sufficiently squeezed, and thus fibrillation is not efficiently achieved. In other words, in this case, only the outer surface is fibrillated, which is undesirable.

Forming a R value thus described would be desirable because the mixing material passes smoothly over the blades.

The one edge toward the nozzle 22 may be formed as a curve. In this case, the acute angle β is set relative to a tangent line passing through a midpoint of the length of the curve. Specifically, the curve may have an R of 3 mm to 5 mm. Forming a value of R thus described would be desirable because the mixture object passes smoothly over the blades.

Further, the one edge toward the nozzle 22 may be formed with a lower portion formed by a straight line and an upper portion formed by a curve, as shown in FIG. 6. In this case, the acute angle β is set based on an angle formed by the straight portion. Specifically, the curved portion may have an R of 3 mm to 5 mm.

Furthermore, one of the two height-forming edges opposite the nozzle 22 forms an angle of 60 to 90 degrees, preferably 80 to 90 degrees, with respect to the center axis of the rotating shaft 12 in a direction toward the nozzle.

In the third spiral blades 14c, if the one edge toward the nozzle 22 is formed as a straight line, the perpendicular cross-section in the direction wound about the rotating shaft 12 may further comprise, together with the two height-forming edges, one terminal edge connecting to the two height-forming edges. The terminal edge may be formed in a length of 0.3 mm to 0.8 mm, preferably in a length of 0.4 mm to 0.7 mm. If the terminal edges are formed below the above-described range, there will be an insufficient generation of shearing force on the mixture object, and if they exceed the above-described range, the thickness of the second spiral blades 14c may become too thick and clogging may occur.

If the one edge toward the nozzle 22 is formed as a curve or a combination of a curve and a straight line as described above, it may be in the form of a direct joining of the two edges of the height formation, without forming a terminal edge, as shown in FIG. 6.

In an embodiment of the present invention, the perpendicular cross-section in the direction in which the fourth spiral blades 14d are wound about the rotating shaft 12 includes two height-forming edges. In this case, one edge toward the nozzle 22 forms an acute angle β of 25 to 50 degrees, preferably 30 to 40 degrees, with respect to the center axis of the rotating shaft 12 in a direction opposite the nozzle. Forming such an acute angle (β) is desirable because the mixture object (e.g., the electrode-active material composition) is squeezed as it passes over the edge having the acute angle (β) and is effectively fibrillized. However, if the acute angle (β) is formed below the above-described range, a disadvantage occurs that leakage flow does not occur and sufficient preliminary fibrillation does not occur, and if the acute angle (β) is formed above the above-described range, the mixture object (e.g., the electrode active material composition) is simply conveyed without passing over the edge and is not sufficiently squeezed, so that fibrillation does not occur efficiently. In other words, in this case, only the outer surface is fibrillated, which is undesirable.

The one edge toward the nozzle 22 may be formed by a lower part formed by a straight line and an upper part formed by a curved line, as shown in FIG. 6. In this case, the acute angle β is set based on an angle formed by the straight portion. Specifically, the curved portion may have an R of 0.4 mm to 0.6 mm.

Furthermore, one of the two height-forming edges opposite the nozzle 22 forms an angle of 60 to 90 degrees, preferably 80 to 90 degrees, with respect to the center axis of the rotating shaft 12 in a direction toward the nozzle.

Meanwhile, in the fourth spiral blades 14d, the perpendicular cross-section in the direction of being wound about the rotating shaft 12 may be connected by a curve with the two height-forming variations R having a value of 0.4 mm to 0.6 mm.

In an embodiment of the present invention, the first spiral blades 14a may be configured in a form in which a single spiral blade is continuously wound around the outer surface of the first tapered portion 12a. In this case, the one spiral blade may be formed in the form of 2 to 7 consecutive turns around the outer surface of the first tapered portion 12a, preferably 3 to 5 consecutive turns. If the first spiral blades are wound around the outer surface of the first tapered portion 12a beyond the above-described range, the initial fibrillation of the mixture object may not occur, and the pitch may be too tight, causing the mixture object to become stuck and not be conveyed.

In an embodiment of the present invention, the second spiral blades 14b may comprise three or more independent blades superimposed on the outer surface of the kneading portion 12b. The number of the second spiral blades 14b may vary depending on the size of the high shear mixing apparatus, but generally may be from three to ten, preferably from four to eight, and even more preferably from four to six. Increasing the number of the blades can have the effect of increasing the fibrillization of the fibrillizable binder. However, an excessive number of blades is undesirable because it reduces the free volume generated by the blades and causes stagnation due to interference with the conveyance of the mixture object.

When three or more independent blades are superimposed on the outer surface of the kneading portion 12b as described above, each spiral blade may be formed with a length of 1/4 to 1 turn around the outer surface of the kneading portion 12b, preferably 1/4 to 1/2 turn, and more preferably 1/4 to 2/5 turn, as shown in FIG. 2. The winding length may be influenced by the length of the kneading portion 12b and the acute angle of the blade.

When three or more independent blades are superimposed on the outer surface of the kneading portion 12b as described above, three or more spiral blades are spirally wound on the outer surface of the kneading portion 12b, as shown in FIG. 2, from a starting point of the kneading portion 12b, extending to an end point of the kneading portion 12b. In this case, it may be desirable for the blades to form a regular spacing.

In an embodiment of the present invention, the second spiral blades 14b and the third spiral blades 14c may be spirally wound in the same direction about the rotating shaft 12.

In an embodiment of the present invention, the third spiral blades 14c may comprise three or more independent blades superimposed on the outer surface of the second tapered portion 12c. The number of the third spiral blades 14c may vary depending on the size of the high shear mixing apparatus, but may typically be from three to ten, preferably from four to eight, and even more preferably from four to six. Increasing the number of the blades can have the effect of increasing the fibrillization of the fibrillizable binder. However, an excessive number of blades is undesirable because it reduces the free volume generated by the blades and causes stagnation due to interference with the conveyance of the mixture object.

When three or more independent blades are superimposed on the outer surface of the second tapered portion 12c, as shown in FIG. 2, each spiral blade may be formed with a length of from 1/4 to 1 turn around the outer surface of the second tapered portion 12c, preferably from 2/5 to 3/5 turns. The winding length may be influenced by the length of the second tapered portion 12c and the acute angle of the blade.

When three or more independent blades are superimposed on the outer surface of the second tapered portion 12c as described above, three or more spiral blades are spirally wound on the outer surface of the second tapered portion 12c from a starting point of the second tapered portion 12c, extending to an end point of the second tapered portion 12c, as shown in FIG. 2. In this case, it may be desirable for the blades to form a regular spacing. However, since the end point of the second tapered portion 12c has a narrow cross-section as a tapered end, the three or more spiral blades may be formed in a form that gradually narrows the spacing as they approach the end point. In this case, the pitch and free volume are reduced, and the effect is to increase fibrillation as the object to be further squeezed and mixed would escape the channel. In other words, high shear mixing can be achieved more effectively.

In an embodiment of the present invention, the second spiral blades 14b and the third spiral blades 14c may be provided independently of each other, as shown in FIG. 2.

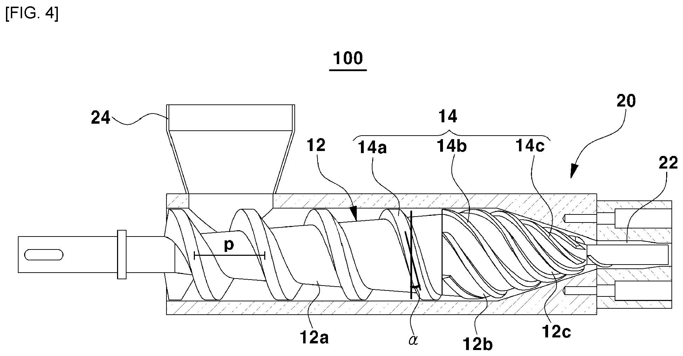

In an embodiment of the present invention, the second spiral blades 14b may extend to an outer surface of the second tapered portion 12c to form the third spiral blades 14c, as shown in FIG. 4.

In an embodiment of the present invention, a gap may be positioned between the second spiral blades 14b and the third spiral blades 14c, i.e., a gap is positioned between a terminal end of the kneading portion 12b of the rotating shaft 12 and a front end of the second tapered portion 12c, as shown in FIG. 2. When the gap is formed in this manner, movement of the mixture object is possible through the gap, so that the effect of mitigating the torque on the second tapered portion can be achieved.

In an embodiment of the present invention, three or more independent blades provided on the second tapered portion 12c may be formed up to the outer periphery of the distal surface of the second tapered portion 12c toward the nozzle 22. When the blades are formed up to the outer periphery of the distal surface of the second tapered portion 12c toward the nozzle 22, it is desirable because kneading and high shear mixing can be more effective, and the mixture object can be more easily delivered to the nozzle 22.

In an embodiment of the present invention, the diameter of the distal surface of the second tapered portion 12c toward the nozzle 22 on the rotating shaft 12 may be from 0.5 to 1 times the inner diameter of the nozzle. Further, the maximum diameter of the second tapered portion 12c may be from 2.1 times to 7.1 times the inner diameter of the nozzle, preferably from 3.1 times to 5.1 times.

In an embodiment of the present invention, the maximum diameter of the first tapered portion 12a on the rotating shaft 12 may be from 2 to 7 times, preferably from 3 to 5 times, and the minimum diameter may be from 1 to 4 times, preferably from 1.5 to 2.5 times, the inner diameter of the nozzle.

In an embodiment of the present invention, the maximum diameter of the kneading portion 12b at the rotating shaft 12 may be from 2.1 times to 7.1 times, preferably from 3.1 times to 5.1 times, the inner diameter of the nozzle, and the minimum diameter may be from 2 times to 7 times, preferably from 3 times to 5 times, the inner diameter of the nozzle. In this case, when the outer diameter of the kneading portion 12b is uniformly formed, it may be formed in the range of the above minimum diameter.

In an embodiment of the present invention, the height at which the first blades 14a protrude from the outer surface of the first tapered portion 12a may be from 10 mm to 20 mm, preferably from 13 mm to 18 mm. The outer periphery of the first blades 14a may have a separation distance from the inner surface of the housing of 0.2 mm to 3 mm, preferably 0.3 to 0.7 mm.

In an embodiment of the present invention, the height of the second blades 14b protruding from the outer peripheral surface of the kneading portion 12b may be from 1 mm to 5 mm, preferably from 2 mm to 4 mm. The outer periphery of the second blades 14b may have a separation distance from the inner surface of the housing of 0.2 mm to 3 mm, preferably 0.3 to 0.7 mm.

In an embodiment of the present invention, the height of the third blades 14c protruding from the outer peripheral surface of the second tapered portion 12c may be from 1 mm to 5 mm, preferably from 2 mm to 3.5 mm. The outer periphery of the third blades 14c may have a separation distance from the inner surface of the housing of 0.3 mm to 3 mm, preferably 0.5 to 1.1 mm.

In an embodiment of the present invention, the height of the fourth blades 14d protruding from the outer peripheral surface of the front end shaft portion 12d may be from 0.5 mm to 3 mm, preferably from 0.7 mm to 1.3 mm. The outer periphery of the fourth blades 14d may have a separation distance from the inner surface of the housing of 0.8 mm to 3 mm, preferably 1 to 2 mm.

In the above, if the separation distance between each blade and the inner surface of the housing is too small, the mixing material cannot be squeezed as it escapes, making it difficult to fibrillize effectively, i.e., only the outer surface may be fibrillized. On the other hand, a separation distance that is too large is undesirable because it reduces the compaction efficiency.

In an embodiment of the present invention, the rotating shaft 12 may further comprise a front end shaft portion 12d extending into the nozzle from a distal end of the second tapered portion 12c toward the nozzle 22, as shown in FIG. 1. It may further include a rear end shaft portion 12e extending from a distal end of the first tapered portion 12a opposite the nozzle 22.

At least one of the front end shaft portion 12d and the rear end shaft portion 12e may be connected to the driving portion to perform a function of transmitting power to the mixing screw.

In an embodiment of the present invention, the inner surface of the housing may have a roughness of 3 µm to 30 µm, preferably 5 µm to 15 µm. A roughness in the above-described range is preferred because it can improve the conveying efficiency and the fibrillization efficiency of the mixture object.

In an embodiment of the present invention, the rotating shaft 12 comprises a first tapered portion 12a whose outer diameter gradually increases in a direction toward the nozzle, a kneading portion 12b having a uniform outer diameter or a gradually increasing outer diameter from a maximum outer diameter of the first tapered portion, and a second tapered portion 12c having a gradually decreasing outer diameter from an end of the kneading portion 12b continuously.

In an embodiment of the present invention, the space between the first tapered portion 12a and the outer surface of the rotating shaft and the housing 20 is gradually reduced toward the nozzle 22, the space between the outer surface of the kneading portion 12b and the housing 20 is gradually reduced or kept uniform as it goes toward the nozzle, and the space between the second tapered portion 12c and the housing 20 may be kept uniform or gradually reduced.

In the above, it may be more desirable that the space between the outer surface of the kneading portion 12b and the housing 20 is maintained uniformly toward the nozzle. Furthermore, it may be further desirable that the space between the second tapered portion 12c and the housing 20 is maintained uniformly.

In an embodiment of the present invention, the high shear mixing apparatus 500 effectively disperses the mixing material and effectively performs the fibrillization of the fibrillizable polymer, such as PTFE, contained in the mixing material. Furthermore, the fibrillization process of the fibrillizable polymer such as PTFE does not place a large load on the device. Therefore, the high shear mixing apparatus of the present invention having the above structure can be preferably used for high shear mixing for fabricating dry electrodes for secondary batteries, making it possible to build mass production equipment with a large capacity.

In particular, when a mixture comprising an active material, a conductive material, and a fibrillizable binder such as PTFE as a binder is subjected to high shear mixing, and a dry free-standing electrode is fabricated by rolling the mixed mixture, the tensile strength of the free-standing electrode is greatly improved, and such a dry free-standing electrode provides an effect of greatly improving the life of the secondary battery.

In an embodiment of the present invention, the high shear mixing apparatus 500 may further comprise, in addition to the configurations described above, a driving portion 200 for powering the rotating shaft 12, as shown in FIG. 1, and may further comprise, without limitation, configurations not mentioned above that are applicable to high shear mixing apparatuses of the art. The configurations of the present disclosure are self-explanatory to those of ordinary skill in the art, and therefore need not be described.

In addition, the high shear mixing apparatus 500 of the present invention may further include a film forming apparatus 300 installed in association with the nozzle 22, as shown in FIG. 1. The film forming apparatus 300 is not particularly limited and may be, for example, a device comprising a pair of pressing rollers.

### [Form for Practicing the Invention]

Hereinafter, the present invention will be described in detail with reference to embodiments. However, the embodiments according to the present invention may be modified in various other forms, and the scope of the present invention should not be construed as being limited to the embodiments described below. The embodiments of the present invention are provided to more fully illustrate the present invention to one of ordinary skill in the art.

### Embodiment 1: Fabrication and Property Evaluation of Free-standing Films by High Shear Mixing Apparatus

### 1) Fabrication of Free-standing Film

The primary mixture for the free-standing electrode was prepared by mixing 95.5 wt% or 97 wt% of NCM powder (trade name: GL80, LG Chem), anode active material particles with an average particle diameter of 10 µm, 1.5 wt% of Li250 (Denka) as a conductive material, and 1.5 wt% or 3 wt% of PTFE as a binder.

The high shear mixing apparatus of the present invention (including the mixing screw of FIG. 5) and a conventional mixing apparatus were driven under conditions as shown in Table 1 to fabricate a secondary mixture in the form of a dough.

The above dough-like secondary mixture was roll-pressed at 100°C using a two roll mill (MR-3, Inoue) to fabricate a 200 µm thick free-standing film.

### Example 1: Property Evaluation of Free-standing Film

### (1) Measurement of Thickness Variation

The thickness of the fabricated free-standing films in the embodiments and comparison examples was measured using an electrode thickness measurement device, Millimar (fabricated by Mahr), and the thickness was measured for a total of 25 points spaced at a distance of 1 cm from each other, with a size of 6 cm wide and 6 cm long relative to the MD direction of the fabricated free-standing films. The above measurements were performed on four samples of free-standing film each, and the thickness variances were calculated for each sample and averaged to give the thickness variances shown in Table 1 below.

### (2) Measurement of Tensile Strength

The free-standing films fabricated in the embodiments and comparison examples were sampled by cutting them into 20 mm wide and 20 mm long pieces, and the tensile strength was measured at a speed of 50 mm/min by the 180 degree peel method using a LLOYD company UTM instrument. The maximum value of the force applied to the film during the above measurement up to the point where a fracture is about to occur is evaluated as the strength of the free-standing film, and the results of the above measurement are shown in Table 1 below.

### (3) Evaluation of the Life Characteristics of the Battery

### ① Fabrication of Lithium Secondary Battery

The anode was fabricated by placing the free-standing film fabricated in the embodiments and comparison examples on one edge of the collector of Primer Coated Aluminum Foil (fabricated by Dongwon Systems) with a thickness of 20 µm, and bonding it through a lamination roll maintained at 120°C.

Using the anode fabricated above, lithium metal was used as the counter electrode, and an electrolyte containing 1 M of LiPF₆ in a solvent of EC : DMC : DEC (volume ratio of 1:2:1) was used to fabricate a coin-type half battery.

### ② Evaluation of the Capacity Retention Rate of Lithium Secondary Battery

After charging and discharging the coin-type half battery fabricated above 100 times at 25°C, under the conditions of a voltage range of 3 to 4.3V and current of 0.33 C-rate, the retention rate of 100 times discharge capacity compared to the capacity of one time discharge was calculated, and the results are shown in Table 1 below.

**[Table 1]**

| | Mixing Apparatus | MixingRPM /Temperature | Conductive material content (wt%) | Binder Content (wt%) | Thickness variances based on 200 µm of free-standing film (%) | Based on 200*µ*m free-standing film Tensile Strength (gf/cm2) | 0.33C/0.33C Room Temperature Lifetime (Capa Efficiency, % @100 cycle |
|---|---|---|---|---|---|---|---|
| Embodiment 1 | High shear mixing apparatus of the present invention | 100 RPM/90 | 1.5 | 1.5 | ± 0.3 | 2,476 | 96.3 |
| Embodiment 2 | High shear mixing apparatus of the present invention | 100 RPM/90 | 1.5 | 3.0 | ± 0.4 | 2,831 | 97.1 |
| Comparison Example 1 | Conventional Single Screw Extruder (with mixing screw in FIG. 8) | 100 RPM/90 | 1.5 | 3.0 | ± 1.8 | 1,824 | 95.4 |
| Comparison Exampple 2 | Conventional Twin Screw Extruder | 100 RPM/90 | 1.5 | 3.0 | Unable to extrude (machine stopped) | -. | -. |
| Comparison Exampl e 3 | Conventional Twin Screw Kneader (FIG. 9) + Roll Press | 100 RPM/90 | 1.5 | 3.0 | ± 8.3 | 1983 | 94.7 |
| Comparison Example 4 | Conventional Twin Screw Kneader (FIG. 9) + Roll Press | 100 RPM/room temperature | 1.5 | 3.0 | ± 10.9 | 1716 | 93.2 |
| Comparison Example 5 | Conventional Paste Mixer + Roll Press | 1,000 RPM/room temperature | 1.5 | 3.0 | ± 6.4 | 1652 | 91.9 |
| Comparison Example 6 | Conventional Lab Blender + Roll Press | 10,000 RPM/room temperature | 1.5 | 3.0 | ± 4.7 | 1597 | 88.5 |

### [Explanation of symbols]

| | | | |
|---|---|---|---|
| 10: | Mixing screw | 12: | Rotating shaft |
| 12a: | First tapered portion | 12b: | Kneading portion |
| 12c: | Second tapered portion | 12d: | Front end of shaft portion |
| 12e: | Rear end of shaft portion | 14: | Blades |
| 14a: | First spiral blades | 14b: | Second spiral blades |
| 14c: | Third spiral blades | 14d: | Fourth spiral blades |
| 20: | Housing | 22: | Nozzle |
| 24: | Hopper | 100: | High shear mixing unit |
| 200: | Driving portion | 300: | Film forming apparatus |

## Claims

1. A high shear mixing apparatus (500), comprising:
a mixing screw (10) and a housing (20) receiving the mixing screw (10);
wherein the housing (20) includes a nozzle (22) provided at a distal end thereof and a hopper (24) in communication therewith,
wherein the mixing screw (10) includes a rotating shaft (12) and blades (14) provided on an outer surface of the rotating shaft (12),
wherein the rotating shaft (12) has a first tapered portion (12a) having a gradually increasing outer diameter in a direction toward the nozzle (22), a kneading portion (12b) having a uniform outer diameter or a gradually increasing outer diameter in the direction toward the nozzle (22), and a second tapered portion (12c) having a gradually decreasing outer diameter in the direction toward the nozzle (22) in this order, and
wherein the blades (14) comprise first spiral blades (14a) disposed on an outer surface of the first tapered portion (12a), second spiral blades (14b) disposed on an outer surface of the kneading portion (12b), and third spiral blades (14c) disposed on an outer surface of the second tapered portion (12c),
**characterized in**
**that** the first spiral blades (14a) and the second spiral blades (14b) are independently formed, a pitch of the first spiral blades (14a) is larger than a pitch of the second spiral blade (14b), and the first spiral blades (14a) and the second spiral blades (14b) are spirally wound in a same direction about the rotating shaft (12)and,
**that** an acute angle of the second spiral blades (14b) is larger than an acute angle of the first spiral blades (14a) based on an acute angle formed by the spiral blades with respect to a cross-section perpendicular to a center axis of the rotating shaft (12), and
**that** the second spiral blades (14b) comprise three or more independent blades (14) superimposed on the outer surface of the kneading portion (12b).

2. The high shear mixing apparatus (500) of claim 1,
wherein the second spiral blades (14b) and third spiral blades (14c) are spirally wound in a same direction about the rotating shaft (12).

3. The high shear mixing apparatus (500) of claim 2,
wherein the third spiral blades (14c) comprise three or more independent blades (14) superimposed on the outer surface of the second tapered portion (12c).

4. The high shear mixing apparatus (500) of claim 3,
wherein the second spiral blades (14b) and third spiral blades (14c) are provided independently of each other.

5. The high shear mixing apparatus (500) of claim 3,
wherein the second spiral blades (14b) extend to the outer surface of the second tapered portion (12c) to form the third spiral blades (14c).

6. The high shear mixing apparatus (500) of claim 5,
wherein a gap is positioned between the second spiral blades (14b) and the third spiral blades (14c), wherein the gap is positioned between a terminal end of the kneading portion (12b) and a front end of the second tapered portion (12c) of the rotating shaft (12).

7. The high shear mixing apparatus (500) of claim 3,
wherein the three or more independent blades (14) provided in the second tapered portion (12c) are formed up to a periphery of a distal surface of the second tapered portion (12c) toward the nozzle (22).

8. The high shear mixing apparatus (500) of claim 7,
wherein a diameter of the distal surface of the second tapered portion (12c) in the rotating shaft (12) toward the nozzle (22) is from 0.5 to 2.0 times as large as an inner diameter of the nozzle (22).

9. The high shear mixing apparatus (500) of claim 1,
wherein the rotating shaft (12) continuously comprises the first tapered portion (12a) having a gradually increasing outer diameter in a direction toward the nozzle (22), the kneading portion (12b) having the uniform outer diameter or the gradually increasing outer diameter from a maximum outer diameter of the first tapered portion (12a), and the second tapered portion (12c) having a gradually decreasing outer diameter from an end of the kneading portion (12b).

10. The high shear mixing apparatus (500) of claim 1,
wherein a space between the outer surface of the first tapered portion (12a) of the rotating shaft (12) and the housing (20) is gradually reduced toward the nozzle (22), a space between the outer surface of the kneading portion (12b) and the housing (20) is gradually reduced or kept uniform toward the nozzle (22), and a space between the second tapered portion (12c) and the housing (20) is kept uniform or gradually reduced.

11. The high shear mixing apparatus (500) of claim 1,
wherein a length of the first tapered portion (12a), a length of the kneading portion (12b), and a length of the second tapered portion (12c) on the rotating shaft (12) are in a ratio of 1 : 0.1 to 0.4 : 0.2 to 0.5.

12. The high shear mixing apparatus (500) of claim 3,
wherein an acute angle of the second spiral blades (14b) is less than or equal to an acute angle of the third spiral blades (14c) based on an acute angle formed by the spiral blades with respect to a cross-section perpendicular to the center axis of the rotating shaft (12).

13. The high shear mixing apparatus (500) of claim 3,
wherein the third spiral blades (14c) have a maximum pitch at a starting point of the second tapered portion (12c) abutting the kneading portion (12b), a minimum pitch at a distal surface of the second taper toward the nozzle (22), and the pitch gradually decreases along the rotating shaft (12) toward the nozzle (22).

14. The high shear mixing apparatus (500) of claim 3,
wherein a perpendicular cross-section in a direction wound about the rotating shaft (12) of the first spiral blades (14a) includes two height-forming edges, wherein one of the height-forming edges toward the nozzle (22) forms an acute angle of 30 to 80 degrees with respect to the center axis of the rotating shaft (12) in a direction opposite the nozzle (22).

15. The high shear mixing apparatus (500) of claim 14,
wherein a perpendicular cross-section in a direction wound about the rotating shaft (12) of the second spiral blades (14b) includes two height-forming edges, wherein one of the height-forming edges toward the nozzle (22) forms an acute angle of 40 to 80 degrees with respect to the center axis of the rotating shaft (12) in a direction opposite the nozzle (22).

16. The high shear mixing apparatus (500) of claim 15,
wherein a perpendicular cross-section in a direction wound about the rotating shaft (12) of the third spiral blades (14c) includes two height-forming edges, wherein one of the height-forming edges toward the nozzle (22) forms an acute angle of 40 to 80 degrees with respect to the center axis of the rotating shaft (12) in the direction opposite the nozzle (22).

17. The high shear mixing apparatus (500) of claim 1,
wherein the high shear mixing apparatus (500) is configured to be used for high shear mixing of a mixture for fabricating a dry electrode comprising a fibrillizable polymer as a binder so as to micro-fibrillate the fibrillizable polymer.

## Patentansprüche

1. Hochscherung-Mischvorrichtung (500) aufweisend:
eine Mischschnecke (10) und ein Gehäuse (20), das die Mischschnecke (10) aufnimmt;
wobei das Gehäuse (20) eine Düse (22), die an einem distalen Ende davon vorgesehen ist, und einen Trichter (24) in fluider Verbindung damit aufweist,
wobei die Mischschnecke (10) eine Drehwelle (12) und Schaufeln (14) aufweist, die an einer Außenfläche der Drehwelle (12) vorgesehen sind,
wobei die Drehwelle (12) einen ersten verjüngten Abschnitt (12a) mit einem allmählich zunehmenden Außendurchmesser in einer Richtung zu der Düse (22) hin, einen Knetabschnitt (12b) mit einem gleichförmigen Außendurchmesser oder einem allmählich zunehmenden Außendurchmesser in der Richtung zu der Düse (22) hin und einen zweiten verjüngten Abschnitt (12c) mit einem allmählich abnehmenden Außendurchmesser in der Richtung zu der Düse (22) hin in dieser Reihenfolge aufweist, und
wobei die Schaufeln (14) erste Spiralschaufeln (14a), die an einer Außenfläche des ersten verjüngten Abschnitts (12a) angeordnet sind, zweite Spiralschaufeln (14b), die an einer Außenfläche des Knetabschnitts (12b) angeordnet sind, und dritte Spiralschaufeln (14c) aufweisen, die an einer Außenfläche des zweiten verjüngten Abschnitts (12c) angeordnet sind,
**dadurch gekennzeichnet, dass**
die ersten Spiralschaufeln (14a) und die zweiten Spiralschaufeln (14b) unabhängig voneinander ausgebildet sind, eine Teilung der ersten Spiralschaufeln (14a) größer als eine Teilung der zweiten Spiralschaufel (14b) ist, und die ersten Spiralschaufeln (14a) und die zweiten Spiralschaufeln (14b) spiralförmig in einer gleichen Richtung um die Drehwelle (12) gewickelt sind, und
ein spitzer Winkel der zweiten Spiralschaufeln (14b) größer als ein spitzer Winkel der ersten Spiralschaufeln (14a) ist, bezüglich eines spitzen Winkels, der durch die Spiralschaufeln in Bezug auf einen Querschnitt senkrecht zu einer Mittelachse der Drehwelle (12) gebildet wird, und
die zweiten Spiralschaufeln (14b) drei oder mehr unabhängige Schaufeln (14) aufweisen, die auf der Außenfläche des Knetabschnitts (12b) überlagert sind.

2. Hochscherung-Mischvorrichtung (500) nach Anspruch 1,
wobei die zweiten Spiralschaufeln (14b) und die dritten Spiralschaufeln (14c) spiralförmig in einer gleichen Richtung um die Drehwelle (12) gewickelt sind.

3. Hochscherung-Mischvorrichtung (500) nach Anspruch 2,
wobei die dritten Spiralschaufeln (14c) drei oder mehr unabhängige Schaufeln (14) aufweisen, die auf der Außenfläche des zweiten verjüngten Abschnitts (12c) überlagert sind.

4. Hochscherung-Mischvorrichtung (500) nach Anspruch 3,
wobei die zweiten Spiralschaufeln (14b) und die dritten Spiralschaufeln (14c) unabhängig voneinander vorgesehen sind.

5. Hochscherung-Mischvorrichtung (500) nach Anspruch 3,
wobei sich die zweiten Spiralschaufeln (14b) zu der Außenfläche des zweiten verjüngten Abschnitts (12c) erstrecken, um die dritten Spiralschaufeln (14c) zu bilden.

6. Hochscherung-Mischvorrichtung (500) nach Anspruch 5,
wobei ein Spalt zwischen den zweiten Spiralschaufeln (14b) und den dritten Spiralschaufeln (14c) positioniert ist, wobei der Spalt zwischen einem Abschlussende des Knetabschnitts (12b) und einem vorderen Ende des zweiten verjüngten Abschnitts (12c) der Drehwelle (12) positioniert ist.

7. Hochscherung-Mischvorrichtung (500) nach Anspruch 3,
wobei die drei oder mehr unabhängigen Schaufeln (14), die in dem zweiten verjüngten Abschnitt (12c) vorgesehen sind, bis zu einem Umfang einer distalen Fläche des zweiten verjüngten Abschnitts (12c) in Richtung der Düse (22) ausgebildet sind.

8. Hochscherung-Mischvorrichtung (500) nach Anspruch 7,
wobei ein Durchmesser der distalen Fläche des zweiten verjüngten Abschnitts (12c) in der Drehwelle (12) in Richtung der Düse (22) von 0,5 bis 2,0 mal so groß wie ein Innendurchmesser der Düse (22) ist.

9. Hochscherung-Mischvorrichtung (500) nach Anspruch 1,
wobei die Drehwelle (12) kontinuierlich den ersten verjüngten Abschnitt (12a) mit einem allmählich zunehmenden Außendurchmesser in einer Richtung zu der Düse (22) hin, den Knetabschnitt (12b) mit dem gleichförmigen Außendurchmesser oder dem allmählich zunehmenden Außendurchmesser von einem maximalen Außendurchmesser des ersten verjüngten Abschnitts (12a) und den zweiten verjüngten Abschnitt (12c) mit einem allmählich abnehmenden Außendurchmesser von einem Ende des Knetabschnitts (12b) aufweist.

10. Hochscherung-Mischvorrichtung (500) nach Anspruch 1,
wobei ein Raum zwischen der Außenfläche des ersten verjüngten Abschnitts (12a) der Drehwelle (12) und dem Gehäuse (20) in Richtung der Düse (22) allmählich verkleinert wird, ein Raum zwischen der Außenfläche des Knetabschnitts (12b) und dem Gehäuse (20) in Richtung der Düse (22) allmählich verkleinert oder gleichförmig gehalten wird und ein Raum zwischen dem zweiten verjüngten Abschnitt (12c) und dem Gehäuse (20) gleichmäßig oder allmählich verkleinert gehalten wird.

11. Hochscherung-Mischvorrichtung (500) nach Anspruch 1,
wobei eine Länge des ersten verjüngten Abschnitts (12a), eine Länge des Knetabschnitts (12b) und eine Länge des zweiten verjüngten Abschnitts (12c) auf der Drehwelle (12) in einem Verhältnis von 1 : 0,1 bis 0,4 : 0,2 bis 0,5 stehen.

12. Hochscherung-Mischvorrichtung (500) nach Anspruch 3,
wobei ein spitzer Winkel der zweiten Spiralschaufeln (14b) kleiner oder gleich einem spitzen Winkel der dritten Spiralschaufeln (14c) ist, bezüglich eines spitzen Winkels, der durch die Spiralschaufeln in Bezug auf einen Querschnitt senkrecht zu der Mittelachse der Drehwelle (12) gebildet wird.

13. Hochscherung-Mischvorrichtung (500) nach Anspruch 3,
wobei die dritten Spiralschaufeln (14c) eine maximale Teilung an einem Startpunkt des zweiten verjüngten Abschnitts (12c), der an den Knetabschnitt (12b) angrenzt, eine minimale Teilung an einer distalen Fläche der zweiten Verjüngung in Richtung der Düse (22) aufweisen und die Teilung entlang der Drehwelle (12) in Richtung der Düse (22) allmählich abnimmt.

14. Hochscherung-Mischvorrichtung (500) nach Anspruch 3,
wobei ein senkrechter Querschnitt in einer Richtung, die um die Drehwelle (12) gewickelt ist, der ersten Spiralschaufeln (14a) zwei höhenbildende Kanten aufweist, wobei eine der höhenbildenden Kanten in Richtung der Düse (22) einen spitzen Winkel von 30 bis 80 Grad bezüglich der Mittelachse der Drehwelle (12) in einer Richtung entgegengesetzt zu der Düse (22) bildet.

15. Hochscherung-Mischvorrichtung (500) nach Anspruch 14,
wobei ein senkrechter Querschnitt in einer Richtung, die um die Drehwelle (12) gewickelt ist, der zweiten Spiralschaufeln (14b) zwei höhenbildende Kanten aufweist, wobei eine der höhenbildenden Kanten in Richtung der Düse (22) einen spitzen Winkel von 40 bis 80 Grad bezüglich der Mittelachse der Drehwelle (12) in einer Richtung entgegengesetzt zu der Düse (22) bildet.

16. Hochscherung-Mischvorrichtung (500) nach Anspruch 15,
wobei ein senkrechter Querschnitt in einer Richtung, die um die Drehwelle (12) gewickelt ist, der dritten Spiralschaufeln (14c) zwei höhenbildende Kanten aufweist, wobei eine der höhenbildenden Kanten in Richtung der Düse (22) einen spitzen Winkel von 40 bis 80 Grad bezüglich der Mittelachse der Drehwelle (12) in der Richtung entgegengesetzt zu der Düse (22) bildet.

17. Hochscherung-Mischvorrichtung (500) nach Anspruch 1,
wobei die Hochscherung-Mischvorrichtung (500) konfiguriert ist, zum Hochscherung-Mischen einer Mischung zum Herstellen einer trockenen Elektrode verwendet zu werden, die ein fibrillierbares Polymer als ein Bindemittel aufweist, um das fibrillierbare Polymer zu mikrofibrillieren.

## Revendications

1. Appareil de mélange à cisaillement élevé (500) comprenant :
une vis mélangeuse (10) et un boîtier (20) contenant la vis mélangeuse (10) ;
le boîtier (20) contenant une buse (22) agencée à une extrémité distale de celui-ci, et une trémie (24) en communication avec celui-ci,
la vis mélangeuse (10) comprenant un arbre de rotation (12) et des lames (14) agencées sur une surface extérieure de l'arbre de rotation (12),
l'arbre de rotation (12) possédant une première partie conique (12a) avec un diamètre extérieur augmentant progressivement dans une direction vers la buse (22), une partie de malaxage (12b) au diamètre extérieur uniforme, ou ayant un diamètre extérieur augmentant progressivement dans la direction vers la buse (22), et une deuxième partie conique (12c) avec un diamètre extérieur diminuant progressivement dans la direction de la buse (22), dans cet ordre, et
les lames (14) comprenant des premières lames en spirale (14a) disposées sur une surface extérieure de la première partie conique (12a), des deuxièmes lames en spirale (14b) disposées sur une surface extérieure de la partie de malaxage (12b), et des troisièmes lames en spirale (14c) disposées sur une surface extérieure de la deuxième partie conique (12c),
**caractérisé en ce que**
les premières lames en spirale (14a) et les deuxièmes lames en spirale (14b) sont formées indépendamment, un pas des premières lames en spirale (14a) est supérieur à un pas des deuxièmes lames en spirale (14b), et les premières lames en spirale (14a) et les deuxièmes lames en spirale (14b) sont enroulées en spirale dans une même direction autour de l'arbre de rotation (12), et
l'angle aigu des deuxièmes lames en spirale (14b) est plus grand que l'angle aigu des premières lames en spirale (14a), d'après un angle aigu formé par les lames en spirale relativement à une section transversale perpendiculaire à un axe central de l'arbre de rotation (12), et
les deuxièmes lames en spirale (14b) comprenant trois lames indépendantes (14), ou davantage, superposées sur la surface extérieure de la partie de malaxage (12b).

2. Appareil de mélange à cisaillement élevé (500) selon la revendication 1,
les deuxièmes lames en spirale (14b) et des troisièmes lames en spirale (14c) étant enroulées en spirale dans une même direction autour de l'arbre de rotation (12).

3. Appareil de mélange à cisaillement élevé (500) selon la revendication 2,
les troisièmes lames en spirale (14c) comprenant trois lames indépendantes (14), ou davantage, superposées sur la surface extérieure de la deuxième partie conique (12c).

4. Appareil de mélange à cisaillement élevé (500) selon la revendication 3,
les deuxièmes lames en spirale (14b) et les troisièmes lames en spirale (14c) étant agencées indépendamment les unes des autres.

5. Appareil de mélange à cisaillement élevé (500) selon la revendication 3,
les deuxièmes lames en spirale (14b) s'étendant vers la surface extérieure de la deuxième partie conique (12c) pour former les troisièmes lames en spirale (14c).

6. Appareil de mélange à cisaillement élevé (500) selon la revendication 5,
un écart étant positionné entre les deuxièmes lames en spirale (14b) et les troisièmes lames en spirale (14c), l'écart étant positionné entre une extrémité terminale de la partie de malaxage (12b) et une extrémité antérieure de la deuxième partie conique (12c) de l'arbre de rotation (12).

7. Appareil de mélange à cisaillement élevé (500) selon la revendication 3,
les trois lames indépendantes (14), ou davantage, agencées dans la deuxième partie conique (12c) étant formées jusqu'à un pourtour d'une surface distale de la deuxième partie conique (12c) vers la buse (22).

8. Appareil de mélange à cisaillement élevé (500) selon la revendication 7,
un diamètre de la surface distale de la deuxième partie conique (12c) dans l'arbre de rotation (12) vers la buse (22) étant de 0,5 à 2,0 fois plus grand qu'un diamètre intérieur de la buse (22).

9. Appareil de mélange à cisaillement élevé (500) selon la revendication 1,
l'arbre de rotation (12) comprenant en continu la première partie conique (12a) ayant un diamètre extérieur augmentant progressivement dans une direction vers la buse (22), la partie de malaxage (12b) ayant un diamètre extérieur uniforme, ou un diamètre extérieur augmentant progressivement depuis un diamètre extérieur maximum de la première partie conique (12a), et la deuxième partie conique (12c) ayant un diamètre extérieur diminuant progressivement depuis une extrémité de la partie de malaxage (12b).

10. Appareil de mélange à cisaillement élevé (500) selon la revendication 1,
un espace entre la surface extérieure de la première partie conique (12a) de l'arbre de rotation (12) et le boîtier (20) diminuant progressivement vers la buse (22), un espace entre la surface extérieure de la partie de malaxage (12b) et le boîtier (20) diminuant progressivement ou étant maintenu uniforme vers la buse (22), et un espace entre la deuxième partie conique (12c) et le boîtier (20) étant maintenu uniforme ou diminuant progressivement.

11. Appareil de mélange à cisaillement élevé (500) selon la revendication 1,
une longueur de la première partie conique (12a), une longueur de la partie de malaxage (12b), et une longueur de la deuxième partie conique (12c) sur l'arbre de rotation (12) étant comprises dans un ratio allant de 1 / 0,1 à 0,4 / 0,2 à 0,5.

12. Appareil de mélange à cisaillement élevé (500) selon la revendication 3,
un angle aigu des deuxièmes lames en spirale (14b) étant inférieur ou égal à un angle aigu des troisièmes lames en spirale (14c) d'après un angle aigu formé par les lames en spirale relativement à une section transversale perpendiculaire à l'axe central de l'arbre de rotation (12).

13. Appareil de mélange à cisaillement élevé (500) selon la revendication 3,
les troisièmes lames en spirale (14c) ayant un pas maximum à un point de départ de la deuxième partie conique (12c) jouxtant la partie de malaxage (12b), un pas minimum à une surface distale du deuxième cône vers la buse (22), et le pas diminuant progressivement le long de l'arbre de rotation (12) vers la buse (22).

14. Appareil de mélange à cisaillement élevé (500) selon la revendication 3,
une section transversale perpendiculaire dans une direction enroulée autour de l'arbre de rotation (12) des premières lames en spirale (14a) comprenant deux bords formant une hauteur, un des bords formant une hauteur vers la buse (22) formant un angle aigu de 30 à 80 degrés relativement à l'axe central de l'arbre de rotation (12) dans une direction face à la buse (22).

15. Appareil de mélange à cisaillement élevé (500) selon la revendication 14,
une section transversale perpendiculaire dans une direction enroulée autour de l'arbre de rotation (12) des deuxièmes lames en spirale (14b) comprenant deux bords formant une hauteur, un des bords formant une hauteur vers la buse (22) formant un angle aigu de 40 à 80 degrés relativement à l'axe central de l'arbre de rotation (12) dans une direction faisant face à la buse (22).

16. Appareil de mélange à cisaillement élevé (500) selon la revendication 15,
une section transversale perpendiculaire dans une direction enroulée autour de l'arbre de rotation (12) des troisièmes lames en spirale (14c) comprenant deux bords formant une hauteur, un des bords formant une hauteur vers la buse (22) formant un angle aigu de 40 à 80 degrés relativement à l'axe central de l'arbre de rotation (12) dans une direction faisant face à la buse (22).

17. Appareil de mélange à cisaillement élevé (500) selon la revendication 1,
l'appareil de mélange à cisaillement élevé (500) étant configuré pour être utilisé pour un mélange à cisaillement élevé d'un mélange pour la fabrication d'une électrode sèche comprenant un polymère fibrillable, en tant que liant permettant la micro-fibrillation du polymère fibrillable.
